# EUROPÄISCHE PATENTSCHRIFT

(11) **EP 3 924 652 B1**
(45) Veröffentlichungstag und Bekanntmachung des Hinweises auf die Patenterteilung: **03.07.2024**
(21) Anmeldenummer: 20704486.8
(22) Anmeldetag: 05.02.2020
(51) Int. Cl.: F16K 11/074, F16K 31/385, F16K 11/00, F16K 31/524, F16K 11/076, F16K 11/085

(54) **VENTIL FÜR EINEN UNTERPUTZEINBAUKÖRPER EINER SANITÄRARMATUR MIT EINEM MENGENREGULIERTEIL UND EINEM TEMPERATURREGULIERTEIL**
VALVE FOR A FLUSH-MOUNTED BODY OF A SANITARY FITTING WITH A QUANTITY-REGULATING PART AND A TEMPERATURE-REGULATING PART
SOUPAPE POUR CORPS ENCASTRÉ DE ROBINETTERIE SANITAIRE MUNIE D'UN ÉLÉMENT DE RÉGULATION DE DÉBIT ET D'UN ÉLÉMENT DE RÉGULATION DE TEMPÉRATURE

(30) Priorität: 13.02.2019 DE 102019103610
(43) Veröffentlichungstag der Anmeldung: 22.12.2021
(73) Patentinhaber: Grohe AG, 58653 Hemer (DE)
(72) Erfinder: TUESHAUS, Jan Philipp, 58675 Hemer (DE); STEINHOFF, Stefan, 59846 Sundern (DE); GAIDA, Waldemar, 40549 Düsseldorf (DE)
(86) Internationale Anmeldenummer: PCT/EP2020/052895
(87) Internationale Veröffentlichungsnummer: WO 2020/165002

(56) Entgegenhaltungen:
- EP-A1- 1 903 267
- WO-A1-92/01883
- WO-A1-2014/125774
- CN-A- 107 990 020
- DE-U1-202018 105 509
- US-A- 3 645 297
- US-A1- 2015 115 183
- US-B1- 7 134 451

## Beschreibung

Die vorliegende Erfindung betrifft ein Ventil für einen Unterputzeinbaukörper einer Sanitärarmatur. Solche Unterputzeinbaukörper sind innerhalb eines Mauerdurchbruchs, einer Vertiefung in einer Wand oder einem sonstigen Träger befestigbar. Insbesondere bei Einbauwänden und Vorwandsystemen haben sich solche Unterputzeinbaukörper bewährt.

Unterputzeinbaukörper dienen der Befestigung einer Funktionseinheit in einer Mauer, einer Wand oder einem Träger. Die Funktionseinheit hat bisher eine Thermostatkartusche und ein Ventil umfasst. Mittels der Thermostatkartusche sind ein Kaltwasser und ein Warmwasser zu einem Mischwasser mit einer gewünschten Mischwassertemperatur mischbar, wobei eine Entnahmemenge des Mischwassers mittels des Ventils steuerbar ist. Hierzu sind ein Kaltwasseranschluss des Unterputzeinbaukörpers regelmäßig mit einem Kaltwasserhausanschluss und ein Warmwasseranschluss des Unterputzeinbaukörpers regelmäßig mit einem Warmwasserhausanschluss über entsprechende Rohrleitungen verbindbar. Weiterhin ist an dem Unterputzeinbaukörper zumindest eine Mischwasserleitung verbindbar, über die das Mischwasser der Sanitärarmatur, wie zum Beispiel einer Handbrause, Kopfbrause, Düse, Auslauf und/oder dergleichen an einer Dusche und/oder Badewanne, zuführbar ist. Das Mischwasser ist von der Thermostatkartusche über entsprechende Leitungen in der Funktionseinheit zumindest einem Ventil zuführbar, mittels dem eine Durchflussmenge der Flüssigkeit durch die Sanitärarmatur steuerbar ist. Bekannte Ventile für Unterputzeinbaukörper weisen einen Betätigungsknopf zum Öffnen und Schließen des Ventils auf, der sich innerhalb eines drehbaren Drehknopfs zur Einstellung einer Durchflussmenge der Flüssigkeit durch das Ventil befindet.

Aus US 2015/0115183 A1, EP 1903 267 A1, US 7,134,451 B1, CN107990020A, WO92/01883A1 und US3645297A sind Ventile für Sanitärarmaturen bekannt geworden.

Die Teilung der Funktionseinheit in eine Thermostatkartusche und ein Ventil erfordert einerseits einen höheren Aufwand bei der Montage sowie einen größeren Bauraum.

Aufgabe der Erfindung ist daher, die mit Bezug auf den Stand der Technik geschilderten Probleme zumindest teilweise zu lösen und insbesondere eine kompakter aufgebaute Funktionseinheit bereitzustellen.

Diese Aufgaben werden gelöst mit einem Ventil gemäß den Merkmalen des unabhängigen Patentanspruchs. Weitere vorteilhafte Ausgestaltungen des Ventils sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Ventil für einen Unterputzeinbaukörper einer Sanitärarmatur bei, zumindest aufweisend:
- ein Ventilgehäuse mit einer sich entlang einer axialen Richtung ersteckenden Längsachse,
- ein drehbares Mengenregulierteil zur Einstellung einer Durchflussmenge einer Flüssigkeit durch das Ventil,
- einen Ventilknopf zum Öffnen und Schließen des Ventils, sowie
- ein drehbares Temperaturregulierteil zur Einstellung einer Temperatur der Flüssigkeit; wobei zumindest das drehbare Mengenregulierteil und das Temperaturregulierteil koaxial zueinander angeordnet sind. Insbesondere ist auch der Ventilknopf koaxial zu Mengenregulierteil und Temperaturregulierteil koaxial angeordnet.

Ventilknopf, Mengenregulierteil und Temperaturregulierteil bilden nun in einem gemeinsamen Ventilgehäuse die Funktionseinheit aus Thermostatkartusche und Ventil.

Das Ventil ist für einen Unterputzeinbaukörper vorgesehen, der insbesondere für Sanitärarmaturen verwendbar ist, die im Zusammenhang mit Duschen und/oder Badewannen zur Anwendung kommen. Bei den Sanitärarmaturen kann es sich insbesondere um Wasserausläufe, Handbrausen, Kopfbrausen, Düsen und/oder dergleichen handeln. Der Unterputzeinbaukörper dient insbesondere der Befestigung des Ventils. Das Ventil umfasst nun zusätzlich ein Temperaturregulierteil als Thermostatkartusche. Mittels der Thermostatkartusche sind insbesondere eine kalte Flüssigkeit (im Folgenden auch als Kaltwasser bezeichnet) und eine warme Flüssigkeit (im Folgenden auch als Warmwasser bezeichnet) zu einer temperierten Flüssigkeit (im Folgenden auch als Mischwasser bezeichnet) mit einer gewünschten (Mischwasser-)Temperatur mischbar. Das Kaltwasser kann dabei eine Kaltwassertemperatur aufweisen, die insbesondere maximal 25 °C (Celsius), bevorzugt 1 °C bis 25 °C, besonders bevorzugt 5 °C bis 20 °C beträgt. Das Warmwasser kann eine Warmwassertemperatur aufweisen, die insbesondere maximal 90 °C, bevorzugt 25 °C bis 90 °C, besonders bevorzugt 55 °C bis 65 °C beträgt. Das Ventil ist insbesondere zumindest teilweise in einem Aufnahmeraum eines Gehäuses des Unterputzeinbaukörpers angeordnet und/oder ist im Wesentlichen zylinderförmig ausgebildet. Solche Unterputzeinbaukörper werden regelmäßig innerhalb eines Mauerdurchbruchs, einer Vertiefung in einer Wand oder einem sonstigen Träger befestigt. Das durch das Temperaturregulierteil gemischte Mischwasser kann in dem Ventil durch das Mengenregulierteil hinsichtlich der Entnahmemenge des Mischwassers über die Sanitärarmatur gesteuert werden .

Das Ventil weist ein Ventilgehäuse mit einer Längsachse auf. Mittels des Ventilgehäuses ist das Ventil insbesondere an beziehungsweise in dem Unterputzeinbaukörper befestigbar. Weiterhin ist das Ventilgehäuse zumindest teilweise rohrförmig ausgebildet.

Der Ventilknopf ist erfindungsgemäß über einen Betätigungsknopf entlang der axialen Richtung gegenüber dem Ventilgehäuse und dem Mengenregulierteil verlagerbar.

Das Mengenregulierteil ist insbesondere über einen ersten Drehknopf betätigbar.

Der Ventilknopf ist zum Öffnen und Schließen des Ventils vorgesehen, wobei der Ventilknopf mittels des Mengenregulierteils drehbar und parallel zu der Längsachse durch den Betätigungsknopf für das Ventil verstellbar ist. Der Ventilknopf ist zum Öffnen und Schließen des Ventils insbesondere parallel zu der Längsachse mittels des Betätigungsknopfs zwischen zwei stabilen bzw. verrasteten Positionen verstellbar. In der ersten stabilen Position ist das Ventil zumindest teilweise geöffnet und in der anderen stabilen Position vollständig geschlossen. Der Ventilknopf befindet sich bevorzugt außerhalb des Unterputzeinbaukörpers und/oder ist insbesondere innerhalb des Betätigungsknopfes bzw. des ersten Drehknopfes angeordnet.

Weiterhin weist das Ventil ein um die Längsachse drehbares Mengenregulierteil zur Einstellung der Durchflussmenge der Flüssigkeit durch das Ventil auf. Mittels des drehbaren Mengenregulierteils ist somit eine Entnahmemenge der Flüssigkeit beziehungsweise des Mischwassers über die Sanitärarmatur einstellbar. Das Mengenregulierteil ist insbesondere drehfest mit dem ersten Drehknopf verbindbar, über den ein Benutzer das Mengenregulierteil zur Einstellung der Durchflussmenge der Flüssigkeit betätigen kann. Über das Mengenregulierteil wird insbesondere eine Durchflussmenge einer (bereits temperierten oder noch nicht temperierten) Flüssigkeit durch das Ventil hin zu einer Entnahmeleitung gesteuert.

Insbesondere weist das Ventil eine Durchflussmengeneinstellzone auf, die zur Einstellung der Durchflussmenge einer temperierten Flüssigkeit vorgesehen ist. Die Durchflussmengeneinstellzone ist insbesondere entlang der axialen Richtung zwischen einer Mischzone, zur Mischung einer kalten Flüssigkeit und einer warmen Flüssigkeit zu der temperierten Flüssigkeit mit eingestellter Temperatur, und zumindest dem Ventilknopf angeordnet.

Erfindungsgemäß wirkt das Mengenregulierteil über den Ventilknopf und eine Innengewindespindel mit einer Außengewindespindel zusammen, so dass eine Drehung des Mengenregulierteils eine Drehung (des Ventilknopfs und) der Innengewindespindel und eine Verlagerung der Außengewindespindel zur Einstellung der Durchflussmenge der Flüssigkeit entlang der axialen Richtung bewirkt.

Insbesondere ist die Außengewindespindel relativ zu dem Ventilgehäuse verdrehfest und mittels des Betätigungsknopfs zum Öffnen und Schließen des Ventils (nur) parallel zu der Längsachse verstellbar. Die Außengewindespindel ist insbesondere zylinderförmig ausgebildet und weist ein Außengewinde auf. Das Außengewinde ist insbesondere nicht vollständig um den gesamten Umfang der Außengewindespindel ausgebildet, sondern weist an seiner Umfangsfläche bevorzugt zumindest zwei Gewindebereiche auf, die in einer Umfangsrichtung voneinander durch gewindefreie Bereiche beabstandet sind. Das Außengewinde kann dazu genutzt werden, die (axiale) Relativlage der Außengewindespindel zu benachbarten Bauteilen einzustellen beziehungsweise im Rahmen der Montage fest vorzugeben.

Weiterhin ist es vorteilhaft, wenn die Außengewindespindel in zumindest einer Nut einer Führung geführt ist. Die Führung ist relativ zu dem Ventilgehäuse insbesondere weder drehbar noch parallel zu der Längsachse verlagerbar. Die Außengewindespindel ist in der Nut insbesondere parallel zu der Längsachse des Ventilgehäuses führbar. Die Führung weist insbesondere eine tellerförmige Basis auf, die sich in einer radialen Richtung des Ventilgehäuses erstreckt. Von der tellerförmigen Basis erstreckt sich die mindestens eine Nut parallel zu der Längsachse. Das Außengewinde der Außengewindespindel erstreckt sich insbesondere aus der Nut in der radialen Richtung heraus und wirkt so mit dem Innengewinde der Innengewindespindel zusammen.

Insbesondere ist die Außengewindespindel mittels der durch das Mengenregulierteil drehbaren Innengewindespindel zur Einstellung der Durchflussmenge der Flüssigkeit parallel zu der Längsachse verstellbar. Die Innengewindespindel kann zumindest teilweise rohrförmig ausgebildet sein, wobei ein Innengewinde an einer inneren Umfangsfläche der Innengewindespindel ausgebildet ist. Das Innengewinde der Innengewindespindel greift insbesondere in das Außengewinde der Außengewindespindel ein, sodass die Außengewindespindel durch eine Drehung der Innengewindespindel parallel zu der Längsachse des Ventilgehäuses verlagerbar ist. Weiterhin ist die Innengewindespindel verdrehfest mit dem Ventilknopf und/oder dem Mengenregulierteil verbunden. Hierzu kann zwischen der Innengewindespindel und dem Ventilknopf bzw. (auch) dem Mengenregulierteil eine Verzahnung ausgebildet sein. Somit ist die Innengewindespindel durch eine Drehung des ersten Drehknopfs beziehungsweise des Mengenregulierteils drehbar. Weiterhin ist die Innengewindespindel durch den Ventilknopf parallel zu der Längsachse verstellbar, wenn der Betätigungsknopf durch einen Benutzer gedrückt wird. Hierzu kann die Innengewindespindel zumindest eine Verbindungsnase aufweisen, die in den Ventilknopf eingreift. Hierdurch sind die Gewindespindel und der Ventilknopf insbesondere gegenüber der axialen Richtung formschlüssig miteinander verbunden.

Insbesondere erstreckt sich eine Spindel durch die Außengewindespindel entlang der Längsachse und ist mit der Außengewindespindel so verbunden, dass die Spindel durch die Außengewindespindel entlang der axialen Richtung verlagerbar ist, wobei die Spindel dabei drehbar gegenüber der Außengewindespindel angeordnet ist.

Über die Spindel ist insbesondere ein Regulierkörper zur Einstellung der Durchflussmenge der Flüssigkeit beziehungsweise des Mischwasser betätigbar. Insbesondere ist der Regulierkörper zur Einstellung der Durchflussmenge entlang der axialen Richtung mit der Spindel verlagerbar. Einstellung der Durchflussmenge erfolgt (ausschließlich) in Abhängigkeit von der Drehung des ersten Drehknopfs bzw. der Drehung der Innengewindespindel (und nicht in Abhängigkeit von der Verlagerung der Innengewindespindel entlang der axialen Richtung durch den Betätigungsknopf).

Insbesondere ist die Spindel mit einem ersten Ende mit dem drehbaren Temperaturregulierteil drehfest verbunden. Das Temperaturregulierteil ist insbesondere mit einem zweiten Drehknopf drehfest verbunden, der durch einen Benutzer betätigbar ist.

Der zweite Drehknopf kann in der axialen Richtung benachbart zu dem ersten Drehknopf angeordnet sein. Alternativ kann der zweite Drehknopf zumindest teilweise (bevorzugt vollständig) innerhalb des ersten Drehknopfs angeordnet sein und durch den ersten Drehknopf entlang der axialen Richtung überdeckt werden, so dass der zweite Drehknopf dann nicht durch einen Benutzer betätigbar ist. Insbesondere kann eine Betätigung nur dann erfolgen, wenn der Betätigungsknopf betätigt wurde und das Ventil zur Durchleitung einer Durchflussmenge hin zu der Entnahmeleitung aktiviert ist.

Bevorzugt sind der Betätigungsknopf und der zweite Drehknopf einteilig ausgeführt bzw. zumindest drehfest miteinander verbunden oder auch nur gemeinsam entlang der axialen Richtung verlagerbar.

Insbesondere ist das erste Ende der Spindel über einen entlang der axialen Richtung gegenüber dem Ventilgehäuse und dem Mengenregulierteil verlagerbaren und den Ventilknopf betätigenden Betätigungsknopf mit dem Temperaturregulierteil drehfest verbunden.

Bevorzugt ist die Spindel über ein zweites Ende (entlang der axialen Richtung gegenüberliegend zu dem ersten Ende angeordnet) mit einer drehbaren Mischwelle zur Einstellung derTemperatur der Flüssigkeit drehfest verbunden.

Insbesondere erstreckt sich die Spindel ausgehend von dem ersten Ende durch den Regulierkörper zur Einstellung der Durchflussmenge entlang der axialen Richtung hindurch bis zum zweiten Ende.

Insbesondere bildet die Mischwelle eine Mischzone zur Mischung einer kalten Flüssigkeit und einer warmen Flüssigkeit zu dertemperierten Flüssigkeit mit eingestellter Temperatur, wobei die Mischwelle eine Nabe aufweist, mit der das zweite Ende drehfest verbunden ist, wobei das zweite Ende gegenüber der Nabe entlang der axialen Richtung verlagerbar ist.

Damit ist die Mischwelle insbesondere ausschließlich in der Umfangsrichtung drehbar aber nicht in der axialen Richtung durch die Spindel verlagerbar.

Insbesondere weist die Mischwelle eine Außenumfangsfläche mit mindestens einem ersten Durchlass für die warme Flüssigkeit und mindestens einem zweien Durchlass für die kalte Flüssigkeit auf, wobei die Mischzone zwischen der Außenumfangsfläche und der Nabe angeordnet ist.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Grö-ßen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: ein bekanntes Ventil, nur mit Mengenregulierteil, in einem Längsschnitt;
- Fig. 2:: ein erste Ausführungsvariante eines Ventil mit Ventilgehäuse in einer perspektivischen Ansicht, im Längsschnitt;
- Fig. 3:: ein Detail des Ventils nach Fig. 2 in einer anderen perspektivischen Ansicht;
- Fig. 4:: eine zweite Ausführungsvariante eines Ventils in einer perspektivischen Ansicht in einer ersten Stellung;
- Fig. 5:: das Ventil nach Fig. 4 in einer zweiten Stellung;
- Fig. 6:: einen ersten Drehknopf, zweiten Drehknopf und Betätigungsknopf in einer ersten Anordnung zueinander in perspektivischer Ansicht; und
- Fig. 7:: den ersten Drehknopf, zweiten Drehknopf und Betätigungsknopf nach Fig. 6 in einer zweiten Anordnung zueinander in perspektivischer Ansicht.

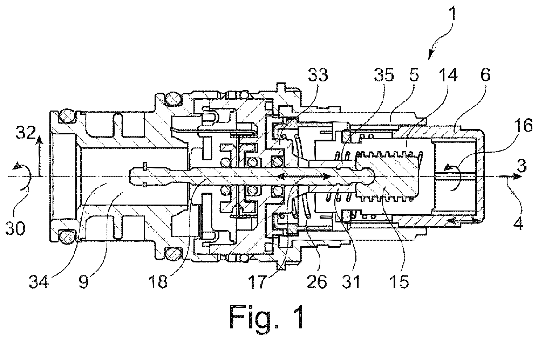

Fig. 1 zeigt ein bekanntes Ventil 1, nur mit Mengenregulierteil 5, in einem Längsschnitt. Das Ventil erstreckt sich mit einer Längsachse 4 entlang einer axialen Richtung 3 und weist ein drehbares Mengenregulierteil 5 zur Einstellung einer Durchflussmenge einer Flüssigkeit durch das Ventil 1 und einen Ventilknopf 6 zum Öffnen und Schließen des Ventils 1, wobei das drehbare Mengenregulierteil 5 und der Ventilknopf 6 koaxial zueinander angeordnet sind. Der Ventilknopf 6 ist über einen Betätigungsknopf 8 (nicht dargestellt) entlang der axialen Richtung 3 gegenüber dem Mengenregulierteil 5 verlagerbar. Das Mengenregulierteil 5 ist über einen ersten Drehknopf 27 (nicht dargestellt) drehbar betätigbar.

Das Ventil 1 weist eine Durchflussmengeneinstellzone 9 auf, die zur Einstellung der Durchflussmenge einer temperierten Flüssigkeit 10 vorgesehen ist. Das Mengenregulierteil 5 wirkt über den Ventilknopf 6 und eine Innengewindespindel 14 mit einer Außengewindespindel 15 zusammen, so dass eine Drehung 16 des Mengenregulierteils 5 eine Drehung 16 des Ventilknopfs 6 und der Innengewindespindel 14 und eine Verlagerung der Außengewindespindel 15 zur Einstellung der Durchflussmenge der Flüssigkeit entlang der axialen Richtung 3 bewirkt.

Die Außengewindespindel 15 ist relativ zu dem Ventilgehäuse verdrehfest und mittels des Betätigungsknopfs 8 zum Öffnen und Schließen des Ventils 1 nur parallel zu der Längsachse 4 verstellbar. Die Außengewindespindel 15 ist zylinderförmig ausgebildet und weist ein Außengewinde auf. Das Außengewinde ist nicht vollständig um den gesamten Umfang der Außengewindespindel 15 ausgebildet, sondern weist an seiner Umfangsfläche zumindest zwei Gewindebereiche auf, die in einer Umfangsrichtung 30 voneinander durch gewindefreie Bereiche beabstandet sind. Das Außengewinde kann dazu genutzt werden, die (axiale) Relativlage der Außengewindespindel 15 zu benachbarten Bauteilen einzustellen beziehungsweise im Rahmen der Montage fest vorzugeben. Die Außengewindespindel 15 ist in zumindest einer Nut 35 einer Führung 31 geführt. Die Führung31 ist relativ zu dem Ventilgehäuse 2 weder drehbar noch parallel zu der Längsachse 4 verlagerbar. Die Außengewindespindel 15 ist in der Nut 35 parallel zu der Längsachse 4 des Ventilgehäuses 1 führbar. Die Führung 31 weist eine tellerförmige Basis 33 auf, die sich in einer radialen Richtung 32 des Ventilgehäuses 1 erstreckt. Von der tellerförmigen Basis 33 erstreckt sich die mindestens eine Nut 35 parallel zu der Längsachse 4. Das Außengewinde der Außengewindespindel 15 erstreckt sich durch die mindestens eine Nut 35 in der radialen Richtung 32 heraus und wirkt so mit dem Innengewinde der Innengewindespindel 14 zusammen.

Die Außengewindespindel 15 ist mittels der durch das Mengenregulierteil 5 drehbaren Innengewindespindel 14 zur Einstellung der Durchflussmenge der Flüssigkeit parallel zu der Längsachse 4 verstellbar. Die Innengewindespindel 14 ist zumindest teilweise rohrförmig ausgebildet, wobei ein Innengewinde an einer inneren Umfangsfläche der Innengewindespindel 14 ausgebildet ist. Das Innengewinde der Innengewindespindel 14 greift in das Außengewinde der Außengewindespindel 15 ein, sodass die Außengewindespindel 15 durch eine Drehung 16 der Innengewindespindel 14 parallel zu der Längsachse 4 des Ventilgehäuses 2 verlagerbar ist. Weiterhin ist die Innengewindespindel 14 verdrehfest mit dem Ventilknopf 6 und dem Mengenregulierteil 5 verbunden. Weiterhin ist die Innengewindespindel 14 durch den Ventilknopf 6 parallel zu der Längsachse 4 verstellbar, wenn der Betätigungsknopf 8 durch einen Benutzer gedrückt wird.

Eine Spindel 18 erstreckt sich durch die Außengewindespindel 15 entlang der Längsachse 4 und ist mit der Außengewindespindel 15 so verbunden, dass die Spindel 18 durch die Außengewindespindel 15 entlang der axialen Richtung 3 verlagerbar ist. Über die Spindel 18 ist ein Regulierkörper 34 zur Einstellung der Durchflussmenge der Flüssigkeit beziehungsweise des Mischwassers betätigbar. Der Regulierkörper 34 ist zur Einstellung der Durchflussmenge entlang der axialen Richtung 3 mit der Spindel 18 um eine Verlagerung 17 verlagerbar. Die Einstellung der Durchflussmenge erfolgt ausschließlich in Abhängigkeit von der Drehung 16 der Innengewindespindel 14.

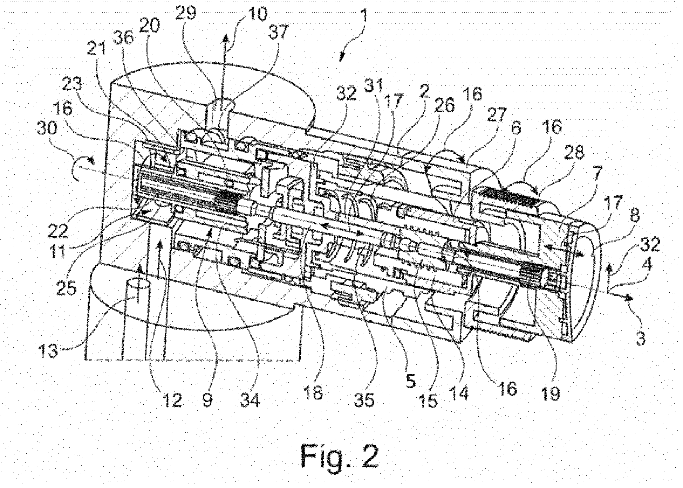

Fig. 2 zeigt eine erste Ausführungsvariante eines Ventils 1 mit Ventilgehäuse 2 in einer perspektivischen Ansicht, im Längsschnitt. Auf die Ausführungen zu Fig. 1 wird Bezug genommen.

Im Unterschied zu dem bekannten Ventil 1 nach Fig. 1 weist das Ventil 1 zusätzlich ein drehbares Temperaturregulierteil 7 zur Einstellung einer Temperatur der Flüssigkeit auf, wobei der Ventilknopf 6 koaxial zu Mengenregulierteil 5 und Temperaturregulierteil 7 angeordnet ist. Ventilknopf 6, Mengenregulierteil 5 und Temperaturregulierteil 7 bilden in einem gemeinsamen Ventilgehäuse 2 die Funktionseinheit aus Thermostatkartusche und Ventil 1.

Der Ventilknopf 6 ist über einen Betätigungsknopf 8 entlang der axialen Richtung 3 gegenüber dem Ventilgehäuse 2 und dem Mengenregulierteil 5 verlagerbar. Das Mengenregulierteil 5 ist über einen ersten Drehknopf 27 betätigbar. Der Ventilknopf 6 ist zum Öffnen und Schließen des Ventils 1 vorgesehen, wobei der Ventilknopf 6 mittels des Mengenregulierteils 5 drehbar und parallel zu der Längsachse 4 durch den Betätigungsknopf 8 für das Ventil 1 verstellbar ist. Der Ventilknopf 6 ist zum Öffnen und Schließen des Ventils 1 parallel zu der Längsachse 4 mittels des Betätigungsknopfs 8 und mithilfe der Feder 26 zwischen zwei stabilen bzw. verrasteten Positionen verstellbar. In der ersten stabilen Position ist das Ventil 1 zumindest teilweise geöffnet und in der anderen stabilen Position vollständig geschlossen. Der Ventilknopf 6 befindet sich außerhalb des Unterputzeinbaukörpers und/oder ist innerhalb des Betätigungsknopfes 8 und des ersten Drehknopfes 27 angeordnet.

In Bezug auf das Mengenregulierteil 5 wird auf die Ausführungen zu Fig. 1 verwiesen. Das Mengenregulierteil 5 ist drehfest mit dem ersten Drehknopf 27 verbunden, über den ein Benutzer das Mengenregulierteil 5 zur Einstellung der Durchflussmenge der Flüssigkeit betätigen kann. Über das Mengenregulierteil 5 wird eine Durchflussmenge einer temperierten Flüssigkeit 10 durch das Ventil 1 hin zu einer Entnahmeleitung 29 gesteuert.

Das Ventil 1 weist eine Durchflussmengeneinstellzone 9 auf, die zur Einstellung der Durchflussmenge 9 einer temperierten Flüssigkeit 10 vorgesehen ist. Die Durchflussmengeneinstellzone 9 ist entlang der axialen Richtung 3 zwischen einer Mischzone 11, zur Mischung einer kalten Flüssigkeit 12 und einer warmen Flüssigkeit 13 zu der temperierten Flüssigkeit 10 mit eingestellter Temperatur, und zumindest dem Ventilknopf 6 angeordnet.

Eine Spindel 18 erstreckt sich durch die Außengewindespindel 15 entlang der Längsachse 4 und ist mit der Außengewindespindel 15 so verbunden, dass die Spindel 18 durch die Außengewindespindel 15 entlang der axialen Richtung 3 verlagerbar ist, wobei die Spindel 18 dabei drehbar gegenüber der Außengewindespindel 15 angeordnet ist. Über die Spindel 18 ist ein Regulierkörper 34 zur Einstellung der Durchflussmenge der Flüssigkeit beziehungsweise des Mischwassers betätigbar. Der Regulierkörper 34 ist zur Einstellung der Durchflussmenge entlang der axialen Richtung 3 mit der Spindel 18 verlagerbar. Die Einstellung der Durchflussmenge erfolgt ausschließlich in Abhängigkeit von der Drehung 16 des ersten Drehknopfs 27 bzw. der Drehung der Innengewindespindel 14 (und nicht in Abhängigkeit von der Verlagerung 17 der Innengewindespindel 14 entlang der axialen Richtung 3 durch den Betätigungsknopf 8).

Die Spindel 18 ist mit einem ersten Ende 19 mit dem drehbaren Temperaturregulierteil 7 drehfest verbunden. Das Temperaturregulierteil 7 ist mit einem zweiten Drehknopf 28 drehfest verbunden, der durch einen Benutzer betätigbar ist. Der zweite Drehknopf 28 ist in der axialen Richtung 3 benachbart zu dem ersten Drehknopf 27 angeordnet. Hier sind der Betätigungsknopf 8 und der zweite Drehknopf 28 drehfest miteinander verbunden, wobei der Betätigungsknopf 8 gegenüber dem zweiten Drehknopf 28 zum Öffnen und Schließen des Ventils 1 (indem der Betätigungsknopf 8 den Ventilknopf 6 betätigt) entlang der axialen Richtung 3 verlagerbar ist.

Das erste Ende 19 der Spindel 18 ist über einen entlang der axialen Richtung 3 gegenüber dem Ventilgehäuse 2 und dem Mengenregulierteil 5 verlagerbaren und den Ventilknopf 6 betätigenden Betätigungsknopf 8 mit dem Temperaturregulierteil 7 drehfest verbunden. Weiter ist die Spindel 18 über ein zweites Ende 20 (entlang der axialen Richtung 3 gegenüberliegend zu dem ersten Ende 19 angeordnet) mit einer drehbaren Mischwelle 21 zur Einstellung der Temperatur der Flüssigkeit drehfest verbunden. Die Spindel 18 erstreckt sich ausgehend von dem ersten Ende 19 durch den Regulierkörper 34 zur Einstellung der Durchflussmenge entlang der axialen Richtung 3 hindurch bis zum zweiten Ende 20.

Die Mischwelle 21 bildet eine Mischzone 11 zur Mischung einer kalten Flüssigkeit 12 und einer warmen Flüssigkeit 13 zu der temperierten Flüssigkeit 10 mit eingestellter Temperatur, wobei die Mischwelle 21 eine Nabe 22 aufweist, mit der das zweite Ende 20 drehfest verbunden ist, wobei das zweite Ende 20 gegenüber der Nabe 22 entlang der axialen Richtung 3 verlagerbar ist. Damit ist die Mischwelle 21 ausschließlich in der Umfangsrichtung 30 drehbar aber nicht in der axialen Richtung 3 durch die Spindel 18 verlagerbar. Die Mischwelle 21 weist eine Außenumfangsfläche 23 mit einem ersten Durchlass 24 für die warme Flüssigkeit 13 und einem zweien Durchlass 25 für die kalte Flüssigkeit 12 auf, wobei die Mischzone 11 zwischen der Außenumfangsfläche 23 und der Nabe 22 angeordnet ist. Die temperierte Flüssigkeit 10 kann dann über den Regulierkörper 34 und durch die Durchflussmengeneinstellzone 9 hin zur Entnahmeleitung 29 strömen.

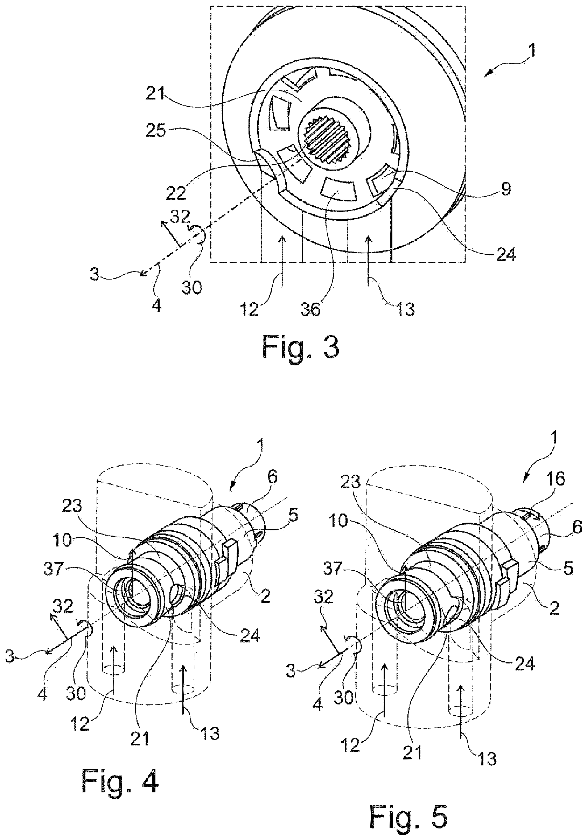

Fig. 3 zeigt ein Detail des Ventils 1 nach Fig. 2 in einer anderen perspektivischen Ansicht. Hier ist die Mischwelle 21 dargestellt. Die Mischwelle 21 weist eine Außenumfangsfläche 23 mit einem ersten Durchlass 24 für die warme Flüssigkeit 13 und einem zweien Durchlass 25 für die kalte Flüssigkeit 12 auf, wobei die Mischzone 11 zwischen der Außenumfangsfläche 23 und der Nabe 22 angeordnet ist. Über die Öffnungen 36 kann die temperierte Flüssigkeit 10 dann in die Durchflussmengeneinstellzone 9 strömen.

Fig. 4 zeigt eine zweite Ausführungsvariante eines Ventils 1 in einer perspektivischen Ansicht in einer ersten Stellung. Fig. 5 zeigt das Ventil 1 nach Fig. 4 in einer zweiten Stellung. Die Fig. 4 und 5 werden im Folgenden gemeinsam beschrieben. Hier weist die Mischwelle 21 ebenfalls eine Außenumfangsfläche 23 mit einem ersten Durchlass 24 für die warme Flüssigkeit 13 und einem zweien Durchlass 25 für die kalte Flüssigkeit 12 auf, wobei die temperierte Flüssigkeit 10 dann über einen zentralen Auslass 37 hin zur Entnahmeleitung 29 geleitet wird.

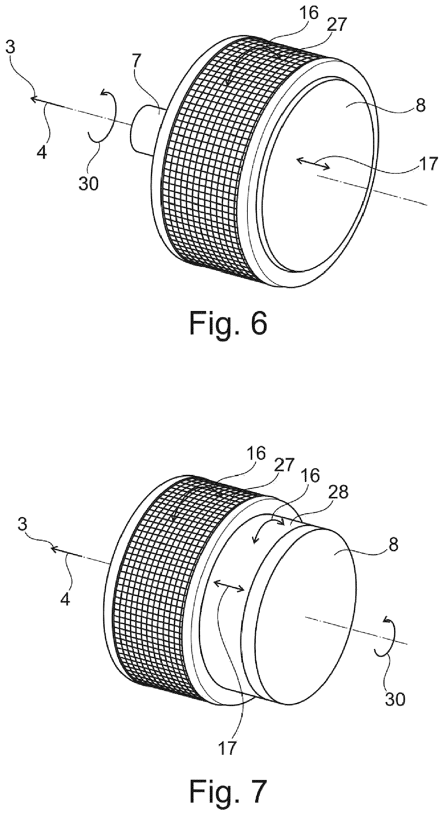

Fig. 6 zeigt einen ersten Drehknopf 27, zweiten Drehknopf 28 und Betätigungsknopf 8 in einer ersten Anordnung zueinander in perspektivischer Ansicht. Fig. 7 zeigt den ersten Drehknopf 27, zweiten Drehknopf 28 und Betätigungsknopf 8 nach Fig. 6 in einer zweiten Anordnung zueinander in perspektivischer Ansicht. Die Fig. 6 und 7 werden im Folgenden gemeinsam beschrieben. Hier ist der zweite Drehknopf 28 vollständig innerhalb des ersten Drehknopfs 27 angeordnet und wird durch den ersten Drehknopf 27 entlang der axialen Richtung 3 überdeckt, so dass der zweite Drehknopf 28 dann nicht durch einen Benutzer betätigbar ist. Eine Betätigung des zweiten Drehknopfs 28 kann nur dann erfolgen, wenn der Betätigungsknopf 8 betätigt wurde (siehe Fig. 7) und das Ventil 1 zur Durchleitung einer Durchflussmenge hin zu der Entnahmeleitung 29 aktiviert ist. Der Betätigungsknopf 8 ist entlang der axialen Richtung 3 um eine Verlagerung 17 verlagerbar. Die Drehknöpfe 27, 28 sind in der Umfangsrichtung 30 um eine Drehung 16 drehbar.

### Bezugszeichenliste

- 1: Ventil
- 2: Ventilgehäuse
- 3: axiale Richtung
- 4: Längsachse
- 5: Mengenregulierteil
- 6: Ventilknopf
- 7: Temperaturregulierteil
- 8: Betätigungsknopf
- 9: Durchflussmengeneinstellzone
- 10: temperierte Flüssigkeit
- 11: Mischzone
- 12: kalte Flüssigkeit
- 13: warme Flüssigkeit
- 14: Innengewindespindel
- 15: Außengewindespindel
- 16: Drehung
- 17: Verlagerung
- 18: Spindel
- 19: erstes Ende
- 20: zweites Ende
- 21: Mischwelle
- 22: Nabe
- 23: Außenumfangsfläche
- 24: erster Durchlass
- 25: zweiter Durchlass
- 26: Feder
- 27: erster Drehknopf
- 28: zweiter Drehknopf
- 29: Entnahmeleitung
- 30: Umfangsrichtung
- 31: Führung
- 32: radiale Richtung
- 33: Basis
- 34: Regulierkörper
- 35: Nut
- 36: Öffnung
- 37: Auslass

## Patentansprüche

1. Ventil (1) für einen Unterputzeinbaukörper einer Sanitärarmatur, zumindest aufweisend:
- ein Ventilgehäuse (2) mit einer sich entlang einer axialen Richtung (3) ersteckenden Längsachse (4),
- ein drehbares Mengenregulierteil (5) zur Einstellung einer Durchflussmenge einer Flüssigkeit durch das Ventil (1),
- einen Ventilknopf (6) zum Öffnen und Schließen des Ventils (1), sowie
- ein drehbares Temperaturregulierteil (7) zur Einstellung einer Temperatur der Flüssigkeit;
wobei zumindest das drehbare Mengenregulierteil (5) und das Temperaturregulierteil (7) koaxial zueinander angeordnet sind, wobei der Ventilknopf (6) über einen Betätigungsknopf (8) entlang der axialen Richtung (3) gegenüber dem Ventilgehäuse (2) und dem Mengenregulierteil (5) verlagerbar ist, **dadurch gekennzeichnet, dass** das Mengenregulierteil (5) über den Ventilknopf (6) und eine Innengewindespindel (14) mit einer Außengewindespindel (15) zusammenwirkt, so dass eine Drehung (16) des Mengenregulierteils (5) eine Drehung (16) der Innengewindespindel (14) und eine Verlagerung (17) entlang der axialen Richtung (3) der Außengewindespindel (15) zur Einstellung der Durchflussmenge der Flüssigkeit bewirkt.

2. Ventil (1) nach Patentanspruch 1, wobei eine Durchflussmengeneinstellzone (9), zur Einstellung der Durchflussmenge einer temperierten Flüssigkeit (10), entlang der axialen Richtung (3) zwischen einer Mischzone (11), zur Mischung einer kalten Flüssigkeit (12) und einer warmen Flüssigkeit (13) zu der temperierten Flüssigkeit (10) mit eingestellter Temperatur, und zumindest dem Ventilknopf (6) angeordnet ist.

3. Ventil (1) nach einem der vorhergehenden Patentansprüche, wobei sich eine Spindel (18) durch die Außengewindespindel (15) entlang der Längsachse (4) erstreckt und mit der Außengewindespindel (15) so verbunden ist, dass die Spindel (18) durch die Außengewindespindel (15) entlang der axialen Richtung (3) verlagerbar ist, wobei die Spindel (18) dabei drehbar gegenüber der Außengewindespindel (15) angeordnet ist.

4. Ventil (1) nach Patentanspruch 3, wobei die Spindel (18) mit einem ersten Ende (19) mit dem drehbaren Temperaturregulierteil (7) drehfest verbunden ist.

5. Ventil (1) nach Patentanspruch 4, wobei das erste Ende (19) über einen entlang der axialen Richtung (3) gegenüber dem Ventilgehäuse (2) und dem Mengenregulierteil (5) verlagerbaren und den Ventilknopf (6) betätigenden Betätigungsknopf (8) mit dem Temperaturregulierteil (7) drehfest verbunden ist.

6. Ventil (1) nach einem der vorhergehenden Patentansprüche 3 bis 5, wobei die Spindel (18) über ein zweites Ende (20) mit einer drehbaren Mischwelle (21) zur Einstellung der Temperatur der Flüssigkeit drehfest verbunden ist.

7. Ventil (1) nach Patentanspruch 6, wobei die Mischwelle (21) eine Mischzone (11) zur Mischung einer kalten Flüssigkeit (12) und einer warmen Flüssigkeit (13) zu der temperierten Flüssigkeit (14) mit eingestellter Temperatur bildet, wobei die Mischwelle (21) eine Nabe (22) aufweist, mit der das zweite Ende (20) drehfest verbunden ist, wobei das zweite Ende (20) gegenüber der Nabe (22) entlang der axialen Richtung (3) verlagerbar ist.

8. Ventil (1) nach Patentanspruch 7, wobei die Mischwelle (21) eine Außenumfangsfläche (23) mit mindestens einem ersten Durchlass (24) für die warme Flüssigkeit (13) und mindestens einem zweien Durchlass (25) für die kalte Flüssigkeit (12) aufweist, wobei die Mischzone (11) zwischen der Außenumfangsfläche (23) und der Nabe (22) angeordnet ist.

## Claims

1. A valve (1) for a flush-mounted body of a sanitary fitting, at least having:
- a valve housing (2) with a longitudinal axis (4) extending along an axial direction (3),
- a rotatable quantity-regulating part (5) for adjusting a flow rate of a liquid through the valve (1),
- a valve button (6) for opening and closing the valve (1), and
- a rotatable temperature-regulating part (7) for adjusting a temperature of the liquid;
wherein at least the rotatable quantity-regulating part (5) and the temperature-regulating part (7) are arranged coaxial with one another, wherein the valve button (6) is displaceable along the axial direction (3) relative to the valve housing (2) and the quantity-regulating part (5) via an actuating button (8), **characterized in that** the quantity-regulating part (5) cooperates with an externally threaded spindle (15) via the valve button (6) and an internally threaded spindle (14), so that a rotation (16) of the quantity-regulating part (5) effects a rotation (16) of the internally threaded spindle (14) and a displacement (17) along the axial direction (3) of the externally threaded spindle (15) in order to adjust the flow rate of the liquid.

2. The valve (1) according to claim 1, wherein a flow rate adjustment zone (9), for adjusting the flow rate of a temperature-controlled liquid (10), is arranged along the axial direction (3) between a mixing zone (11), for mixing a cold liquid (12) and a warm liquid (13) to form the temperature-controlled liquid (10) at an adjusted temperature, and at least the valve button (6) .

3. The valve (1) according to any one of the preceding claims, wherein a spindle (18) extends through the externally threaded spindle (15) along the longitudinal axis (4) and is connected to the externally threaded spindle (15) in such a manner that the spindle (18) can be displaced by the externally threaded spindle (15) along the axial direction (3), wherein the spindle (18) is arranged to be rotatable relative to the externally threaded spindle (15).

4. The valve (1) according to claim 3, wherein the spindle (18), with a first end (19), is non-rotatably connected to the rotatable temperature-regulating part (7).

5. The valve (1) according to claim 4, wherein the first end (19) is non-rotatably connected to the temperature-regulating part (7) via an actuating button (8) which can be displaced along the axial direction (3) relative to the valve housing (2) and the quantity-regulating part (5) and which actuates the valve button (6).

6. The valve (1) according to any one of the preceding claims 3 to 5, wherein the spindle (18) is non-rotatably connected via a second end (20) to a rotatable mixing shaft (21) for adjusting the temperature of the liquid.

7. The valve (1) according to claim 6, wherein the mixing shaft (21) forms a mixing zone (11) for mixing a cold liquid (12) and a warm liquid (13) to form the temperature-controlled liquid (14) at an adjusted temperature, wherein the mixing shaft (21) has a hub (22) to which the second end (20) is non-rotatably connected, wherein the second end (20) is displaceable relative to the hub (22) along the axial direction (3).

8. The valve (1) according to claim 7, wherein the mixing shaft (21) has an outer circumferential surface (23) with at least one first passage (24) for the warm liquid (13) and at least one second passage (25) for the cold liquid (12), wherein the mixing zone (11) is arranged between the outer circumferential surface (23) and the hub (22).

## Revendications

1. Soupape (1), destinée à un élément à encastrer d'une robinetterie sanitaire, comportant au moins :
- un corps de soupape (2), comprenant un axe longitudinal (4) s'étendant le long d'une direction axiale (3),
- une pièce de régulation du débit (5), destinée à régler un débit d'un liquide à travers la soupape (1),
- un bouton de soupape (6), destiné à ouvrir et à fermer la soupape (1), et
- une pièce de régulation thermique (7) rotative, destinée à régler une température du liquide ;
au moins la pièce de régulation du débit (5) rotative et la pièce de régulation thermique (7) étant placées de manière coaxiale l'une par rapport à l'autre, le bouton de soupape (6) étant déplaçable par l'intermédiaire d'une tête d'actionnement (8) le long de la direction axiale (3) par rapport au corps de soupape (2) et à la pièce de régulation du débit (5), **caractérisée en ce que** la pièce de régulation du débit (5) coopère par l'intermédiaire du bouton de soupape (6) et d'une broche taraudée (14) avec une broche filetée (15), de telle sorte qu'une rotation (16) de la pièce de régulation du débit (5) provoque une rotation (16) de la broche taraudée (14) et un déplacement (17) le long de la direction axiale (3) de la broche filetée (15), pour le réglage du débit du liquide.

2. Soupape (1) selon la revendication 1 du brevet, une zone de réglage (9) du débit, destinée à régler le débit d'un liquide (10) tempéré le long de la direction axiale (3) étant placée entre une zone de mélange (11), destinée au mélange d'un liquide froid (12) et d'un liquide chaud (13) pour obtenir le liquide tempéré (10) à une température de réglage et au moins le bouton de soupape (6).

3. Soupape (1) selon l'une quelconque des revendications précédentes du brevet, une broche (18) s'étendant à travers la broche filetée (15) le long de l'axe longitudinal (4) et étant reliée avec la broche filetée (15) de telle sorte que la broche (18) soit déplaçable à travers la broche filetée (15) le long de la direction axiale (3), à cet effet, la broche (18) étant placée de manière rotative par rapport à la broche filetée (15).

4. Soupape (1) selon la revendication 3 du brevet, la broche (18) étant reliée de manière solidaire en rotation par une première extrémité (19) avec la pièce de régulation thermique (7) rotative.

5. Soupape (1) selon la revendication 4 du brevet, la première extrémité (19) étant reliée de manière solidaire en rotation, par l'intermédiaire d'un bouton d'actionnement (8) déplaçable le long de la direction axiale (3) par rapport au corps de soupape (2) et la pièce de régulation du débit (5) et actionnant le bouton de soupape (6) avec la pièce de régulation thermique (7).

6. Soupape (1) selon l'une quelconque des revendications précédentes 3 à 5 du brevet, la broche (18) étant reliée de manière solidaire en rotation par l'intermédiaire d'une deuxième extrémité (20) avec un arbre mélangeur (21) rotatif, pour le réglage de la température du liquide.

7. Soupape (1) selon la revendication 6, l'arbre mélangeur (21) formant une zone de mélange (11) pour le mélange d'un liquide froid (12) et d'un liquide chaud (13), pour obtenir le liquide tempéré (14) à une température réglée, l'arbre mélangeur (21) comportant un moyeu (22) avec lequel la deuxième extrémité (20) est reliée de manière solidaire en rotation, la deuxième extrémité (20) étant déplaçable le long de la direction axiale (3) par rapport au moyeu (22).

8. Soupape (1) selon la revendication 7, l'arbre mélangeur (21) comportant une surface périphérique (23) extérieure, pourvue d'au moins un premier passage (24) pour le liquide chaud (13) et d'au moins un deuxième passage (25) pour le liquide froid (12), la zone de mélange (11) étant placée entre la surface périphérique (23) extérieure et le moyeu (22).
